# EUROPÄISCHE PATENTSCHRIFT

(11) **EP 2 993 381 B1**
(45) Veröffentlichungstag und Bekanntmachung des Hinweises auf die Patenterteilung: **12.09.2018**
(21) Anmeldenummer: 15177880.0
(22) Anmeldetag: 22.07.2015
(51) Int. Cl.: F16K 1/22, F16K 11/052

(54) **VENTILVORRICHTUNG FÜR EINE VERBRENNUNGSKRAFTMASCHINE**
VALVE DEVICE FOR A COMBUSTION ENGINE
DISPOSITIF DE SOUPAPE POUR UN MOTEUR A COMBUSTION INTERNE

(30) Priorität: 28.08.2014 DE 102014112336
(43) Veröffentlichungstag der Anmeldung: 09.03.2016
(73) Patentinhaber: Pierburg GmbH, 41460 Neuss (DE)
(72) Erfinder: Sutty, Patrick, 40477 Düsseldorf (DE); Fassbender, Dr., Ulrich, 41189 Mönchengladbach (DE); Vierkotten, Dirk, 53804 Much (DE); Reimers, Thorsten, 41472 Neuss (DE); Cui, Jian, 71634 Ludwigsburg (DE); Gerards, Hans, 52538 Gangelt (DE); Paffrath, Dr., Holger, 50259 Pulheim (DE); Michels, Jürgen, 41238 Mönchengladbach (DE)
(74) Vertreter: Patentanwälte ter Smitten Eberlein-Van Hoof Rütten Partnerschaftsgesellschaft mbB

(56) Entgegenhaltungen:
- EP-A1- 0 625 659
- EP-A1- 2 902 602
- WO-A1-2009/059999
- DE-B- 1 062 074
- US-A1- 2009 014 674

## Beschreibung

Die Erfindung betrifft eine Ventilvorrichtung für eine Verbrennungskraftmaschine mit einem Gehäuse, das einen Einlasskanal sowie einen ersten und einen zweiten Auslasskanal aufweist, wobei ein Ventilkörper vorgesehen ist, der einen Fluidstrom vom Einlasskanal zu den beiden Auslasskanälen steuert, wobei der Ventilkörper auf einer Welle angeordnet ist, die in dem Gehäuse drehbar gelagert ist und mittels eines Aktuators antreibbar ist, wobei eine Längsachse der Welle im Wesentlichen in Anströmrichtung des Fluidstromes verläuft.

Derartige Ventilvorrichtungen werden in Verbrennungskraftmaschinen beispielsweise als sogenannte Kombi-Ventile zur Steuerung und Drosselung des heißen Abgasmassenstroms eingesetzt. So ist es aus der TW 10-2012-0026382 bekannt, ein derartiges Ventil einlassseitig mit einer Abgasleitung zu verbinden und den ersten Auslasskanal mit einem Abgasrückführkanal und den zweiten Auslasskanal mit einer Abgasleitung Richtung Endschalldämpfer zu verbinden. Durch ein derartiges Kombi-Ventil können dann sowohl die Funktionen eines Abgasrückführventils als auch eines Abgasklappenventils durchgeführt werden. Ein großes Problem, insbesondere bei derartigen Kombi-Ventilen, stellt die Verstellung des Ventilkörpers dar, da hierbei hohe Stellkräfte und ein entsprechend ausgelegter Aktuator benötigt werden. Aus der DE 1 062 074 ist auch eine derartige Ventilvorrichtung bekannt, die einen mittig auf einer Drehwelle gelagerten Ventilkörper aufweist, der neben Endstellungen, die den Fluidstrom in einen ersten oder zweiten Auslasskanal führen, eine Zwischenstellung einnehmen kann, derart, dass ein Teil des Fluidstromes in den ersten Auslasskanal und ein Teil des Fluidstromes in den zweiten Auslasskanal zu führen ist. Auch diese Ventilvorrichtung weist den genannten Nachteil auf.

Aus der WO 2009/059999 A1 ist es dahingegen bereits bekannt, eine Längsachse von zwei Ventilkörpern im Wesentlichen in Anströmrichtung verlaufen zu lassen. Die Anordnung der zwei Ventilkörper sowie deren Betätigungseinrichtung ist jedoch sehr aufwendig und kompliziert gestaltet. Außerdem sind Zwischenstellungen, in denen beide Auslasskanäle durchströmt werden, nur sehr schwer zu realisieren. Darüber hinaus ist aus der EP 625 659 A1 ein Drehschieberventil bekannt, bei dem einem Einlasskanal zwei Auslasskanäle zugeordnet sind und bei dem ebenfalls eine Längsachse des Ventilkörpers in Anströmrichtung verläuft. Dieses Ventil weist jedoch den Nachteil auf, dass prinzipbedingt der Einlasskanal und die Auslasskanäle parallel zueinander verlaufen, was wiederum große Bauraumprobleme bereitet. Auch sind Zwischenstellungen mit dieser Ventilvorrichtung nicht zu realisieren.

Die nachveröffentlichte EP 2 902 602 A1 offenbart eine Ventilvorrichtung, deren Längswelle nicht in Anströmrichtung verlauft und bei der zudem der Ventilkörper mit seiner planen Fläche, zentral auf der Längswelle gelagert ist.

Aufgabe der Erfindung ist es daher, eine Ventilvorrichtung bereitzustellen, die den oben genannten Nachteil auf kostengünstige und einfache Weise vermeidet.

Diese Aufgabe wird dadurch gelöst, dass der Ventilkörper ein erstes Klappenorgan aufweist, das plan ausgeführt ist und sich unmittelbar oder mittelbar mit einer Grundseite an die Welle anschließt, wobei der Ventilkörper eine Zwischenstellung einnehmen kann, derart, dass ein Teil des Fluidstromes In den ersten Auslasskanal und ein Teil des Fluidstromes in den zweiten Auslasskanal zu führen ist. Hierdurch ist die Schließfläche des einen Ventilkörpers nicht mehr entgegen dem Fluidstrom gerichtet. Insbesondere in den Betriebsphasen, in denen der Ventilschließkörper eine Zwischenstellung derart einnimmt, dass ein Teil des Fluidstroms in die Abgasrückführleitung und ein Teil des Fluidstroms zum Endschalldämpfer geführt werden, ist hierdurch eine besonders leichte und somit auch schnelle Verstellung des Ventilkörpers möglich.

In einer besonders vorteilhaften Ausführungsform weist der Ventilkörper ein erstes Klappenorgan auf, das plan ausgeführt ist und sich unmittelbar oder mittelbar mit einer Grundseite an die Welle anschließt. Hierbei kann in vorteilhafter Weise das erste Klappenorgan federnd auf einem zweiten Klappenorgan angeordnet sein, wobei das erste Klappenorgan mit dem ersten Auslasskanal und das zweite Klappenorgan mit dem zweiten Auslasskanal in Wirkverbindung steht. Hierdurch können auf einfache Weise die hohen Leckageanforderungen hinsichtlich einer Abdichtung des ersten Auslasskanals, der mit einer Abgasrückführleitung verbunden ist, erfüllt werden.

Dadurch, dass zumindest das erste Klappenorgan eine Rechteckklappe ist, liegt der Schwerpunkt dieses Klappenorgans besonders nahe an der Klappenwelle, was ebenfalls zu einer leichten Verstellbarkeit des Ventilkörpers beiträgt. In vorteilhafter Weise verläuft die Welle unter einem Winkel 0° ≤ α ≤ 45°, insbesondere α = 20°, zum Fluidstrom gerichtet. Hierdurch ist weiterhin eine sehr leichtgängige Verstellbarkeit in den Zwischenstellungen gegeben, wobei zudem hier noch eine Fail-Safe-Funktion bei einem Aktuatorausfall unterstützt wird.

Die Erfindung wird anhand einer Zeichnung näher erläutert, hierbei zeigt:
Figur 1 eine schematische Ansicht einer Verbrennungskraftmaschine,
Figur 2 eine perspektivische Ansicht einer erfindungsgemäßen Ventilvorrichtung,
Figur 3 eine Schnittansicht der Ventilvorrichtung aus Figur 2 mit einem Ventilkörper in einer ersten Betriebsstellung, und
Figur 4 eine Schnittansicht der Ventilvorrichtung aus Figur 2 mit einem Ventilkörper in einer zweiten Betriebsstellung.

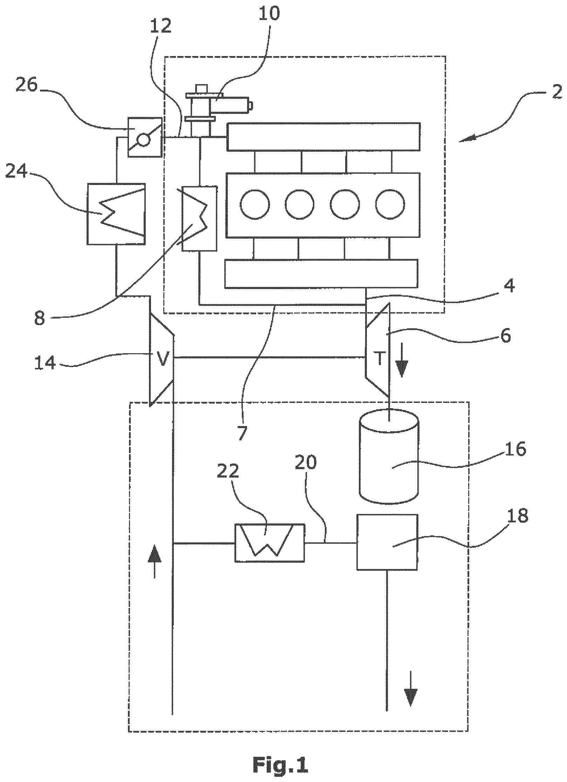

Figur 1 zeigt in einer schematischen Ansicht eine Verbrennungskraftmaschine 2, die eine Abgasleitung 4 aufweist, die zu einem Turbine 6 führt. Von der Abgasleitung 4 zweigt eine erste Abgasrückführleitung 7, die unter einem hohen Druck stehendes Abgas über einen ersten Abgaskühler 8 zu einem Abgasrückführventil 10 führt, das einer zur Brennkraftmaschine 2 führenden Frischluftleitung 12 dieses Abgas zuführt. Die Turbine 6, die auf bekannte Weise mit einem Verdichter 14 gekoppelt ist, entspannt das Abgas und führt dieses beispielsweise bei einer Diesel-Brennkraftmaschine über einen Diesel-Partikelfilter 16 zur erfindungsgemäßen Ventilvorrichtung 18. In einer zweiten Abgasrückführleitung 20 ist ein zweiter Abgaskühler 22 angeordnet. Der Vollständigkeit halber sei noch ein Wärmetauscher 24 und ein Drosselventil 26 erwähnt.

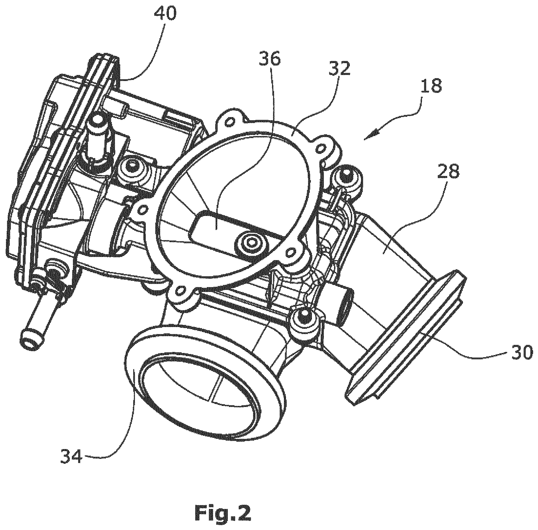

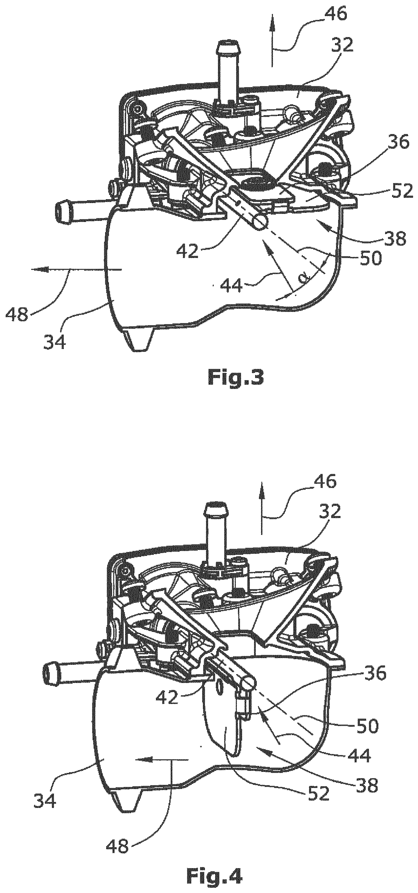

Figur 2 zeigt in einer perspektivischen Ansicht die erfindungsgemäße Ventilvorrichtung 18. Die Ventilvorrichtung 18 besitzt ein Gehäuse 28 mit einem Einlasskanal 30 sowie einem ersten Auslasskanal 32 und einem zweiten Auslasskanal 34. Des Weiteren ist ein erstes Klappenorgan 36 eines Ventilkörpers 38 (siehe hierzu Figuren 3 und 4) in einer Schließstellung des ersten Auslasskanals 32 zu erkennen. Des Weiteren ist im vorliegenden Ausführungsbeispiel im Gehäuse ein Aktuator 40 dargestellt, durch den auf bekannte Weise eine Welle 42 für den Ventilkörper 38 antreibbar ist.

Figur 3 zeigt in einer perspektivischen Schnittansicht die Ventilvorrichtung 18 aus Figur 2. Mit einem Pfeil 44 ist hier die Anströmrichtung eines Abgasstromes im Einlasskanal 30 im Bereich des Ventilkörpers 38 dargestellt. Die Anströmrichtung stimmt in diesem Bereich natürlich überein mit der Längsrichtung des Einlasskanals 30. In gleicher Weise ist mit dem Pfeil 46 eine erste Ausströmrichtung des ersten Auslasskanals 32 und mit einem Pfeil 48 eine zweite Ausströmrichtung des Abgasgasstromes im zweiten Auslasskanal 34 gekennzeichnet. Eine Längsachse 50 der Welle 42 weist nun in einer Schließebene des Ventilkörpers 38 für den ersten Auslasskanal 32 einen Winkel von 20° bezogen auf die Anströmrichtung des Abgasstroms im ersten Einlasskanals 30 auf. Der Ventilkörper 38 weist ein erstes Klappenorgan 36 und ein zweites Klappenorgan 52 auf, über das der Ventilkörper 38 an die Welle 42 angelenkt ist. Zwischen dem ersten Klappenorgan 36 und dem zweiten Klappenorgan 52 ist ein nicht weiter dargestelltes Federorgan vorgesehen, so dass das erste Klappenorgan 36 gegenüber dem zweiten Klappenorgan 52 eine Schwenkmöglichkeit besitzt. Hierdurch schließt das erste Klappenorgan 36, das im vorliegenden Ausführungsbeispiel als plane Rechteckklappe ausgeführt ist, auf jeden Fall den ersten Auslasskanal 32, an den sich die zweite Abgasrückführleitung 20 anschließt, leckagedicht ab. Diese Betriebsstellung ist in Figur 3 dargestellt.

Figur 4 zeigt eine perspektivische Schnittansicht der Ventilvorrichtung 18 aus Figur 2, in der der Ventilkörper 38 und hierbei das zweite Klappenorgan 52 den zweiten Auslasskanal 34, an den sich eine Abgasleitung, die zum Endschalldämpfer führt, anschließt, ab. Auf bekannte Weise Ist hier jedoch eine Sollleckage vorgesehen, dadurch, dass das zweite Klappenorgan 52 den zweiten Auslasskanal 34 nicht vollständig abschließt. Im Aktuator ist auf bekannte Weise auch noch ein Federorgan vorgesehen, das im Falle des Ausfalles des Aktuators den Ventilkörper 38 in die in Figur 3 dargestellte Betriebsstellung überführt. Diese Betriebsstellung wird hierbei auch noch durch die anliegende Abgasströmung dadurch unterstützt, dass die Welle 42 und dadurch der Ventilkörper 38 gegenüber der Anströmrichtung im Einlasskanal 30 mit einem Winkel α = 20° angewinkelt ist.

## Patentansprüche

1. Ventilvorrichtung für eine Verbrennungskraftmaschine (2) mit einem Gehäuse (28), das einen Einlasskanal (30) sowie einen ersten und einen zweiten Auslasskanal (32, 34) aufweist, wobei ein Ventilkörper (38) vorgesehen ist, der einen Fluidstrom vom Einlasskanal (30) zu den beiden Auslasskanälen (32, 34) steuert, wobei der Ventilkörper (38) auf einer Welle (42) angeordnet ist, die in dem Gehäuse (28) drehbar gelagert ist und mittels eines Aktuators (40) antreibbar ist, wobei eine Längsachse (50) der Welle (42) im Wesentlichen in Anströmrichtung des Fluidstromes verläuft, **dadurch gekennzeichnet, dass** der Ventilkörper (38) ein erstes Klappenorgan (36) aufweist, das plan ausgeführt ist und sich unmittelbar oder mittelbar mit einer Grundseite an die Welle (42) anschließt, wobei der Ventilkörper (38) eine Zwischenstellung einnehmen kann, derart, dass ein Teil des Fluidstromes in den ersten Auslasskanal (32) und ein Teil des Fluidstromes in den zweiten Auslasskanal (34) zu führen ist.

2. Ventilkörper nach Anspruch 1, **dadurch gekennzeichnet, dass** das erste Klappenorgan (36) federnd auf einem zweiten Klappenorgan angeordnet ist, wobei das erste Klappenorgan (36) mit dem ersten Auslasskanal (32) und das zweite Klappenorgan mit dem zweiten Auslasskanal (34) in Wirkverbindung steht.

3. Ventilkörper nach Anspruch 1 oder 2, **dadurch gekennzeichnet, dass** zumindest das erste Klappenorgan (36) eine Rechteckklappe ist.

4. Ventilkörper nach einem der vorhergehenden Ansprüche, **dadurch gekennzeichnet, dass** die Welle (42) unter einem Winkel 0° ≤ α ≤ 45°, insbesondere α = 20°, zum Fluidstrom gerichtet verläuft.

## Claims

1. Valve device for an internal combustion engine (2) having a housing (28) with an inlet duct (30) and a first and second outlet duct (32, 34), wherein a valve body (38) is provided that controls a fluid flow from the inlet duct (30) to the two outlet ducts (32, 34), wherein the valve body (38) is arranged on a shaft (42) rotatably supported in the housing (28) and configured to be driven by an actuator (40), wherein a longitudinal axis (50) of the shaft (42) extends substantially in the inflow direction of the fluid flow, **characterized in that** the valve body (38) has a first flap member (36) of planar design and adjoining the shaft (42) by a basic side either directly or indirectly, wherein the valve body (38) is adapted to assume an intermediate position such that one part of the fluid flow is guided into the first outlet duct (32) and one part of the fluid flow is guided into the second outlet duct (34).

2. Valve device of claim 1, **characterized in that** the first flap member (36) is arranged in a resilient manner on a second flap member, wherein the first flap member (36) is in operative connection with the first outlet duct (32) and the second flap member is in operative connection with the second outlet duct (34).

3. Valve device of claim 1 or 2, **characterized in that** at least the first flap member (36) is a rectangular flap.

4. Valve device of one of the preceding claims, **characterized in that** the shaft (42) extends at an angle 0° ≤ α ≤ 45°, in particular α = 20°, with respect to the fluid flow.

## Revendications

1. Dispositif de soupape pour un moteur à combustion interne (2) avec un carter (28) comportant un conduit d'entrée (30) et un premier et un deuxième conduit de sortie (32, 34), un corps de soupape (38) étant prévu qui commande un courant de fluide du conduit d'entrée (30) vers les deux conduits de sortie (32, 34), ledit corps de soupape (38) étant disposé sur un arbre (42) supporté de manière rotative dans le carter (28) et apte à être entrainé par un actionneur (40), un axe longitudinal (50) de l'arbre (40) s'étendant essentiellement dans la direction d'afflux du courant de fluide, **caractérisé en ce que** le corps de soupape (38) comporte un premier organe de clapet (36) plan et joint l'arbre (42) par une face de base soit directement ou indirectement, ledit corps de soupape (38) pouvant prendre une position intermédiaire, de sorte qu'un part du courant de fluide est dirigé dans le premier conduit de sortie (32) et un part du courant de fluide est dirigé dans le deuxième conduit de sortie (34).

2. Dispositif de soupape selon la revendication 1, **caractérisé en ce que** le premier organe de clapet (36) est disposé de manière résiliente sur un deuxième organe de clapet (36), ledit premier organe de clapet (36) étant en liaison active avec le premier conduit de sortie (32) et ledit deuxième organe de clapet étant en liaison active avec le deuxième conduit de sortie (34).

3. Dispositif de soupape selon la revendication 1 ou 2, **caractérisé en ce qu'**au moins le premier organe de clapet (36) est un clapet rectangulaire.

4. Dispositif de soupape selon l'une quelconque des revendications précédentes, **caractérisé en ce que** l'arbre (42) s'étend dans un angle 0° ≤ α ≤ 45°, particulièrement α = 20°, par rapport au courant de fluide.
